# EUROPEAN PATENT APPLICATION

(11) **EP 2 305 550 A1**
(43) Date of publication of application: **06.04.2011**
(21) Application number: 09171817.1
(22) Date of filing: 30.09.2009
(51) Int. Cl.: B62K 21/18

(54) **Bicycle handlebar stem securing device and method therefor**

(71) Applicant: Lee Chien Hao, Taichung City (TW)
(72) Inventor: Lee Chien Hao, Taichung City (TW)
(74) Representative: Chaillot, Geneviève

(57) **Abstract**

A method for securing handlebar stem (73) to steering tube (74) includes a step of placing a head tube (71), an upper bearing (72) set and a stem tube on a top of a steering tube (73), and an underside of the stem tube (73) being in contact with the upper bearing set (72); a step of using a securing device having an expandable portion (21) inserted into the steering tube (74) and applying a downward force to a top of the stem tube (73); a step of rotating the securing device (22) to urge the expandable portion (21) against an inner periphery of the steering tube (74) and the downward force pressing the stem tube (73) onto the upper bearing set (72), and a step of releasing the expandable portion and removing the securing device from the steering tube. The securing device can be used repeatedly and reduces the bicycle weight.

## Description

### FIELD OF THE INVENTION

The present invention relates to a securing method and a securing device for securing the handlebar stem to a non-thread steering tube.

### BACKGROUND OF THE INVENTION

A conventional steering system for bicycles generally includes the steering tube, the hub and the wheel, and a handlebar connected to the top end of the steering tube, a handlebar stem, and two bearing sets located on two ends of the head tube of the bicycle. The steering tube extends through the head tube and the two bearing sets located between the steering tube and the head tube so that when turning the handlebar, the wheel and the steering tube turn while the bicycle frame is maintained forward.

The two bearing sets have their inner periphery contacting the steering tube and their outer periphery contacting the inner periphery of the head tube such that the steering tube is rotatable relative to the head tube. The two bearing sets have to be securely mounted to the two ends of the head tube by the handlebar.

A securing device is needed to provide a downward force to the handlebar stem which presses the bearing sets to set the whole assembly. For the non-thread steering tube, there are two securing devices to secure the steering tube and the handlebar stem. One of which includes expandable plates which are expanded outward to contact against the inner periphery of the steering tube and the other of the securing device includes an expandable frame. Both of the two securing devices are cooperated with a bolt which is rotated to expand the expandable plates and the expandable frame.

The first securing device is located in the top of the steering tube and includes a bolt which extends through the expandable plates and a head of the bolt protrudes out from the steering tube and presses on the handlebar stem so as to position the handlebars stem between the bearing sets and the securing device.

The second securing device includes a positioning frame, an urging member and a cap, wherein the positioning frame is a tubular member with a passage and grooves are defined in the outer surface of the positioning frame. The urging member is cooperated with the passage and includes tapered outer surface. The urging member is located in the passage of the positioning frame and has a threaded hole. The cap has a threaded rod which is threadedly connected with the threaded hole of the urging member. The cap includes a driving hole for being connected with a tool.

The two securing devices have to be put in the steering tube by special tools and then the threaded rod is then connected to the expandable plates or expandable frame. By rotating the threaded rod, the cap applies a downward force to position the bearing sets.

It is noted that the securing device is left within the steering tube after the handlebar stem is connected to the steering tube. It is difficult to remove the securing device from the steering tube so that the manufacturers generally leave the securing device in the steering tube. A cover is used to close the opening of the steering tube. The securing device left in the steering tube does not have any function and may affect the disengagement of the related parts when maintaining the steering system. Besides, the securing device needs multiple installation steps and requires higher level of precision so that the securing device increases the manufacturing cost. The securing device left in the steering tube also increases the weight of the bicycle and this does not meet the requirement of the market.

The present invention intends to provide a method for securing the handlebar stem to the steering tube and the securing device for doing the same. The securing device can be easily removed from the steering tube after the steering system is assembled.

### SUMMARY OF THE INVENTION

The present invention relates to a method for securing handlebar stem to steering tube and the method includes a step of placing a head tube, an upper bearing set and a stem tube on a top of a steering tube, and an underside of the stem tube being in contact with the upper bearing set; a step of using a securing device having an expandable portion inserted into the steering tube and applying a downward force to a top of the stem tube; a step of rotating the securing device to urge the expandable portion against an inner periphery of the steering tube and the downward force pressing the stem tube onto the upper bearing set, and a step of releasing the expandable portion and removing the securing device from the steering tube. The securing device can be used repeatedly and reduces the bicycle weight.

The primary object of the present invention is to provide a method for securing the handlebar stem to the steering tube, and the securing device can be removed from the steering tube after the steering system is completely assembled. There will be no part left in the steering tube.

Another object of the present invention is to provide a method for securing the handlebar stem to the steering tube, wherein the securing device can be used repeatedly and reduces the bicycle weight.

Yet another object of the present invention is to provide a method for securing the handlebar stem to the steering tube, wherein the securing device is not left in the steering tube so as to simplify maintenance steps for the steering system.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows the steps of the method of the present invention;
Fig. 2 is a perspective view to show the steering system of a bicycle assembled by the method of the present invention;
Fig. 3 is an exploded view to show the securing device of the present invention;
Fig. 4 is a cross sectional view of the securing device of the present invention located in the steering tube;
Fig. 5 is a cross sectional view to show that the securing device of the present invention is removed from the steering tube;
Fig. 6 is a cross sectional view to show that a tool is used to rotate the driving member to expand the expandable member in the steering tube;
Fig. 7 is a cross sectional view to show that a pressing unit is pressed on the stem tube;
Fig. 8 is a cross sectional view to show that the pressing member presses onto the stem tube;
Fig. 9 shows that a bolt is used to fasten the two lugs on the stem tube;
Fig. 10 shows that the pressing member is first removed from the steering tube;
Fig. 11 shows that a tool is used to rotate and loosen the driving member and the wedge-shaped member moves downward and a gap is formed between the driving member and the steering tube;
Fig. 12 shows that the securing device is removed from the steering tube;
Fig. 13 is a perspective view to show a second embodiment of the steering system of a bicycle assembled by the method of the present invention;
Fig. 14 is an exploded view to show the securing device of the second embodiment of the present invention;
Fig. 15 is a cross sectional view of the securing device of the second embodiment of the present invention located in the steering tube;
Fig. 16 is a cross sectional view to show that the driving rod of the securing device of the present invention is rotated to move the upper and bottom wedges;
Fig. 17 is a cross sectional view to show that the upper and bottom wedges of the second embodiment of the present invention contact the steering tube and the lever is then pivoted to lock the status;
Fig. 18 is a cross sectional view to show that the lever is pivoted in order to loosen the securing device of the second embodiment of the present invention;
Fig. 19 is a cross sectional view to show that the lever is rotated to loosen the securing device of the second embodiment of the present invention, and
Fig. 20 shows that the securing device of the second embodiment of the present invention is removed from the steering tube and a cap seals the opening of the steering tube.

### DETAILED DESCRIPTION OF THE PREFERRED EMBODIMENT

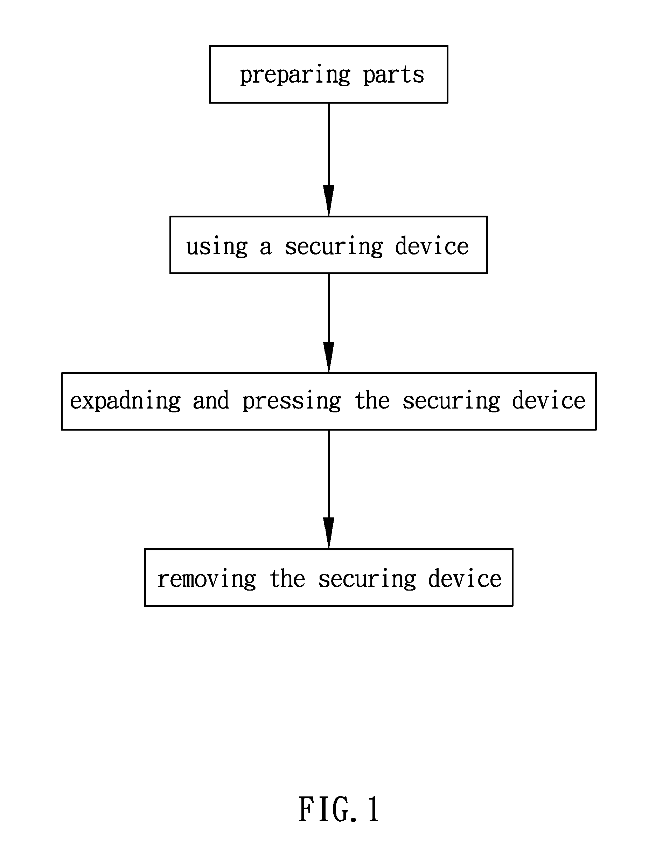

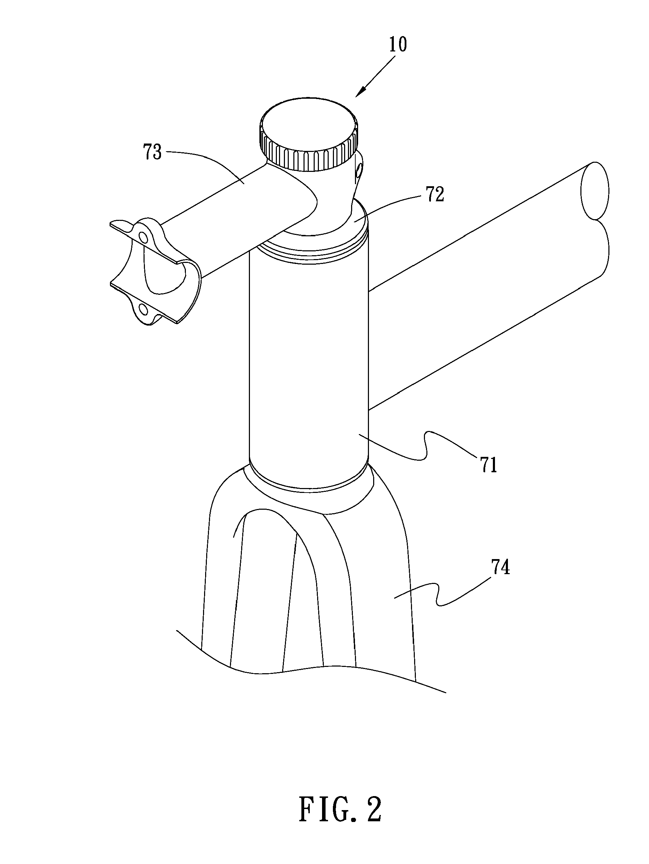

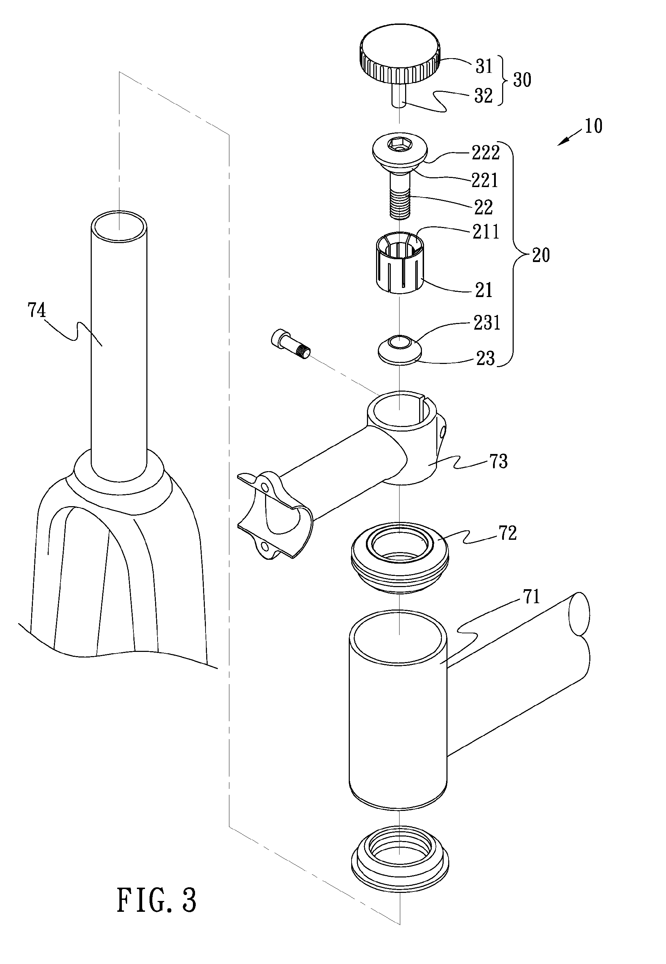

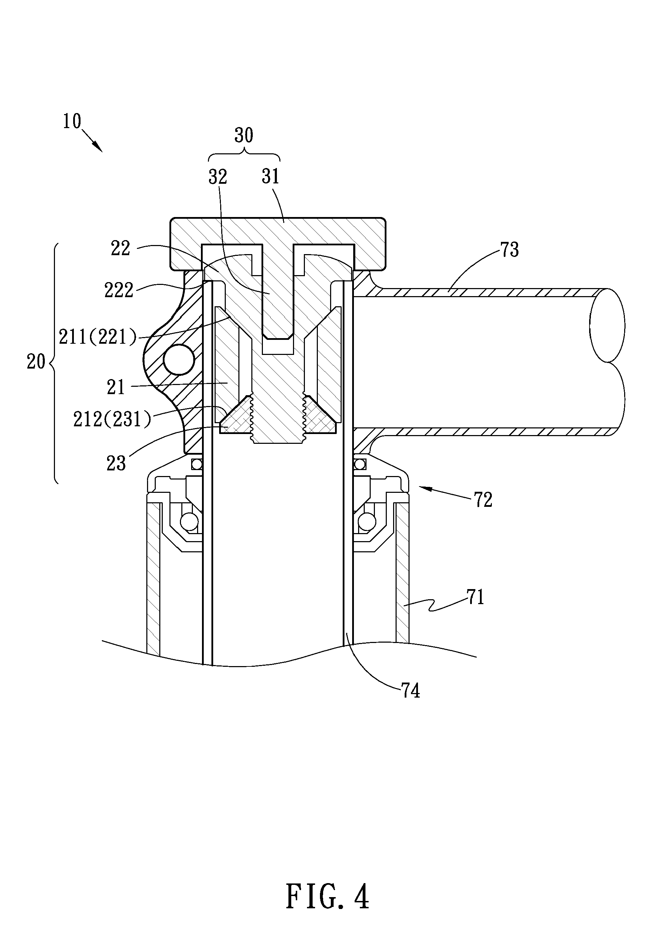

Referring to Figs. 1 to 4, the method for securing handlebar stem to steering tube comprises the following steps:
step (a): placing a head tube 71, an upper bearing set 72 and a stem tube 73 on a top of a steering tube 74, an underside of the stem tube 73 being in contact with the upper bearing set 71;
step (b): using a securing device 10 having an expandable portion inserted into the steering tube 74 and applying a downward force to a top of the stem tube 73;
step (c): rotating the securing device 10 to urge the expandable portion against an inner periphery of the steering tube 74 and the downward force pressing the stem tube 74 onto the upper bearing set 72, and
step (d): releasing the expandable portion and removing the securing device 10 from the steering tube 74.

The method is completely proceeded by using the securing device 10 which includes an expandable unit 20 and a pressing unit 30.

The expandable unit 20 has an expandable member 21 and the pressing unit 30 activates the expandable member 21 to expand and contact the inner periphery of the steering tube 74. The expandable member 21 is a tubular member and includes a first upper tapered surface 211 and a first bottom tapered surface 212 on two ends thereof. A driving member 22 extends through the expandable member 21 and includes a second upper tapered surface 221 which is engaged with the first upper tapered surface 211 of the expandable member 21. A wedge-shaped member 23 is located beneath the driving member 22 and able to linearly move when the driving member 22 rotates. The wedge-shaped member 23 includes a second bottom tapered surface 231 which is engaged with the first bottom tapered surface 212. The driving member 22 includes a pressing surface 222 which contacts the top of the steering tube 74.

The pressing unit 30 applies a force to press the top of the stem tube 73 which is moved and presses onto the upper bearing set 72. The pressing unit 30 includes a pressing member 31 which contacts the top of the stem tube 73 and the pressing member 31 further includes a driving rod 32 which is inserted into the driving member 22.

When assembling, the driving member 22 is inserted into the driving member 21 and is threadedly connected with the wedge-shaped member 23. The first upper tapered surface 211 and the first bottom tapered surface 212 are respectively engaged with the second upper tapered surface 221 and the second bottom tapered surface 231. The pressing member 31 has its driving rod 32 to be inserted in the driving member 22 to set the assembly.

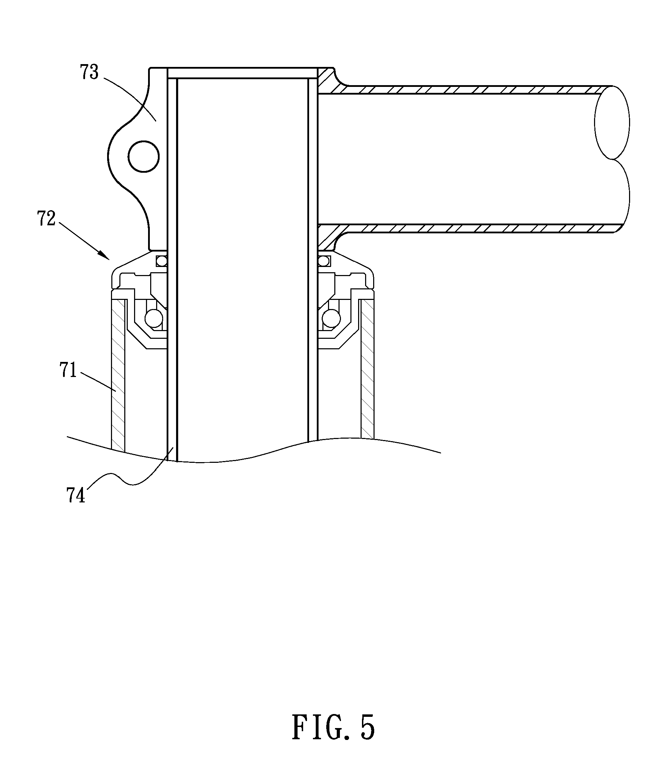

As shown in Fig. 5, in step (a), the head tube 71, the upper bearing set 72, the stem tube 73 and the steering tube 74 are arranged in sequence, but are not securely connected to each other. The top of the stem tube 73 protrudes above the steering tube 74.

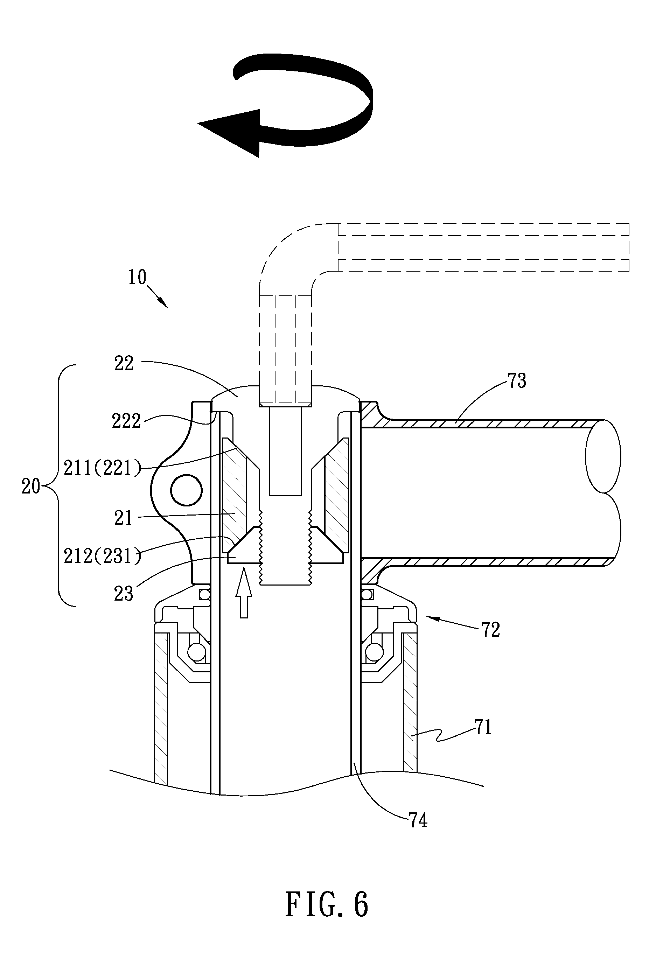

As shown in Fig. 6, in step (b), the expandable portion of the securing device 10 is inserted into the steering tube 74 and the pressing surface 222 of the driving member 22 contacts the top of the steering tube 74, and a gap is defined between the expandable member 21 and the inner periphery of the steering tube 74.

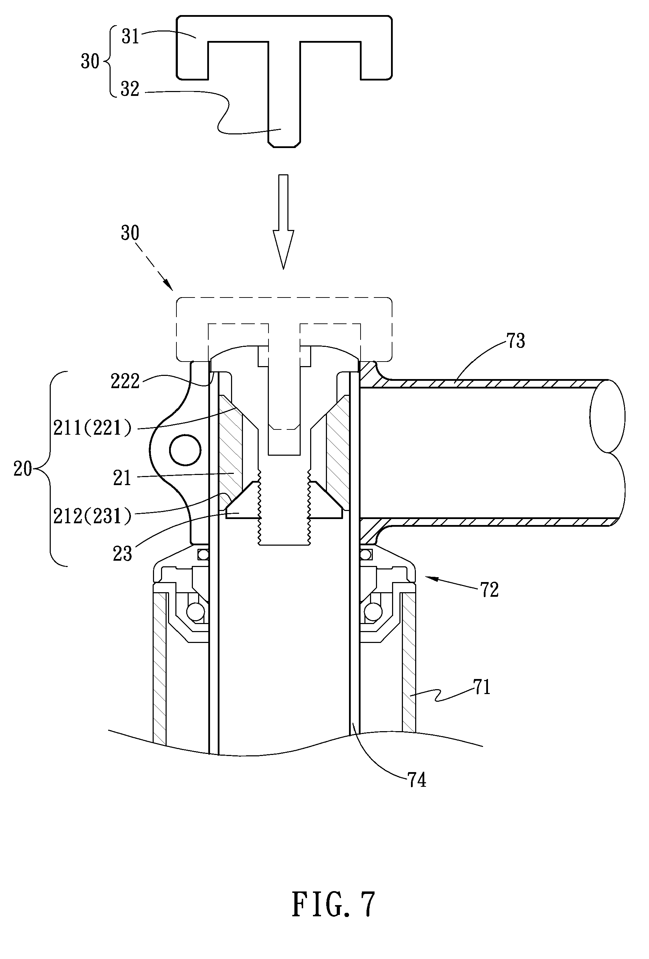

In step (c), the securing device 10 is rotated to drive the wedge-shaped member 23 to move linearly and upward to allow the second bottom tapered surface 231 contact the first upper tapered surface 211.The outer surface of the expandable member 21 is in contact with the inner periphery of the steering tube 74 to set the expandable unit 20 in position. As shown in Fig. 7, the driving rod 32 of the pressing member 31 is then inserted into the driving member 22.

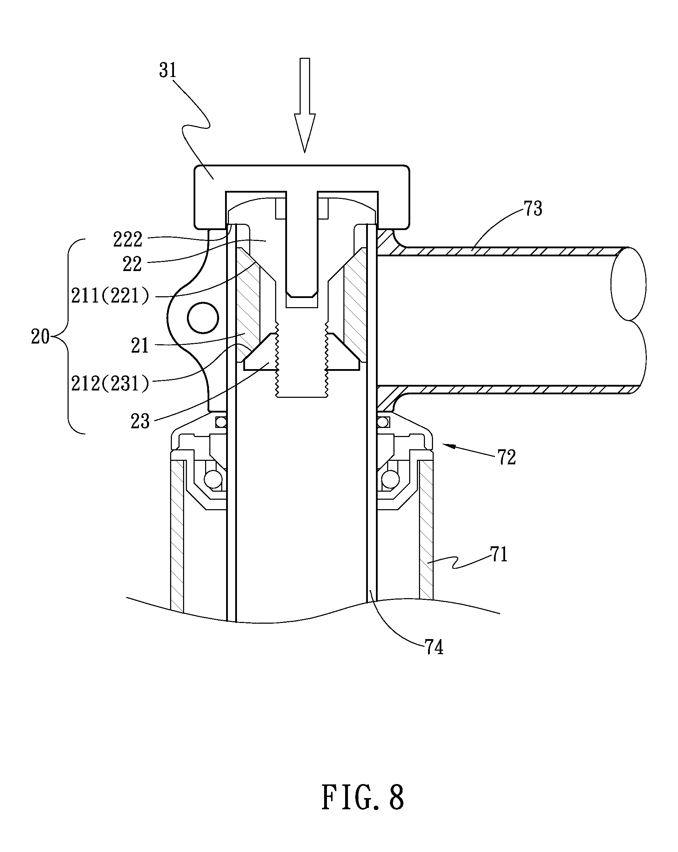

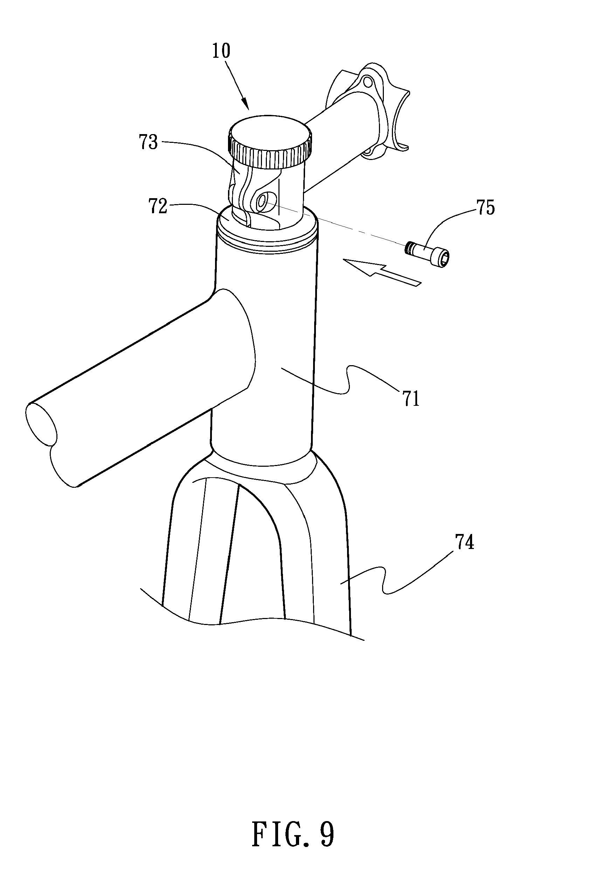

As shown in Fig. 8, a downward force is applied to the pressing member 31 to move the stem tube 73 downward and push the upper bearing 72 to a secured status. The top of the steering tube 74 now is located above the stem tube 73. As shown in Fig. 9, a bolt 75 is used to fasten the two lugs on the stem tube in radial direction to securely mount the stem tube 73 onto the steering tube 74.

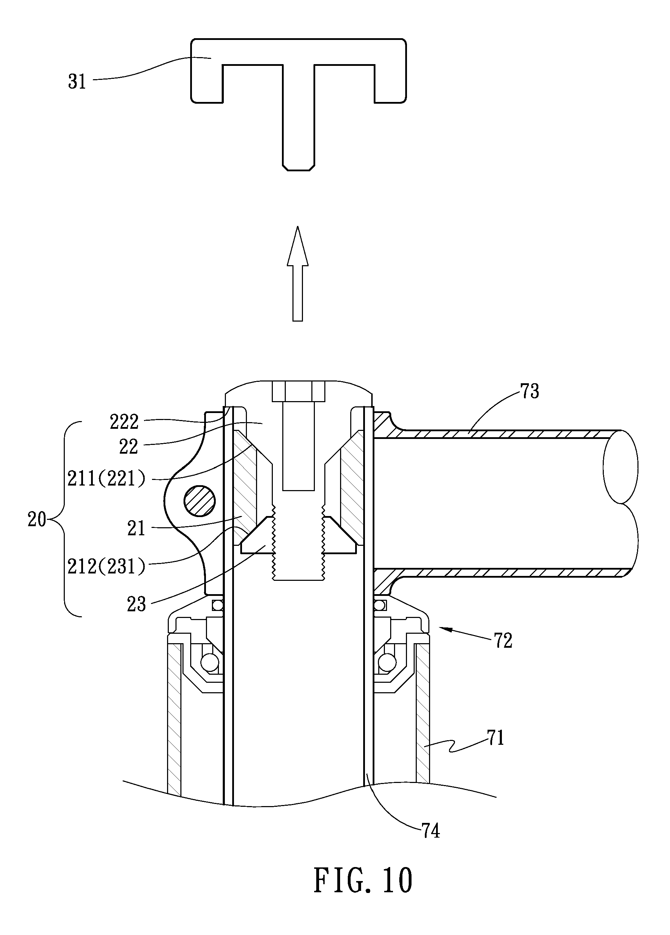

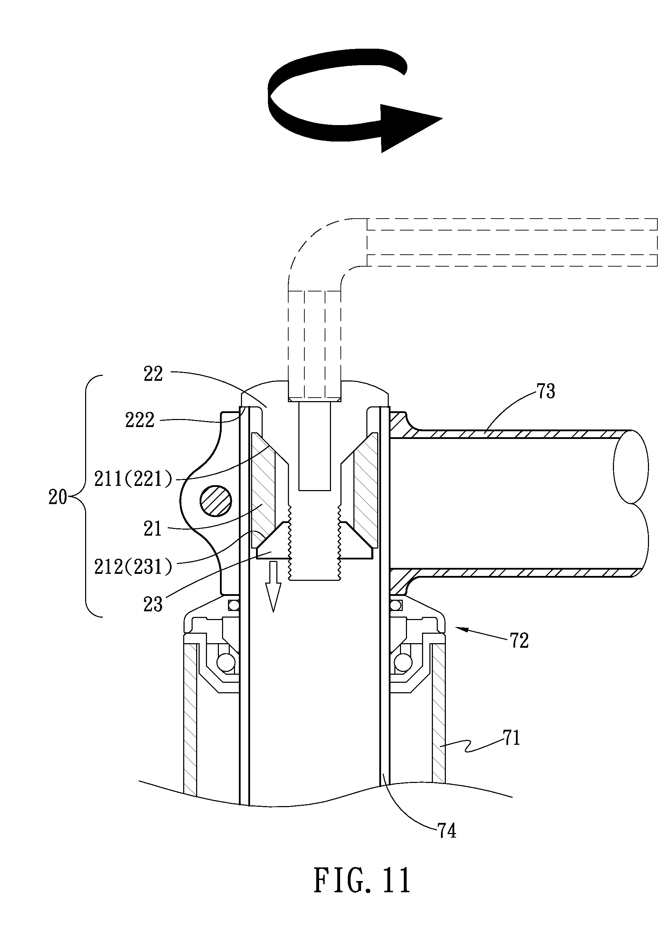

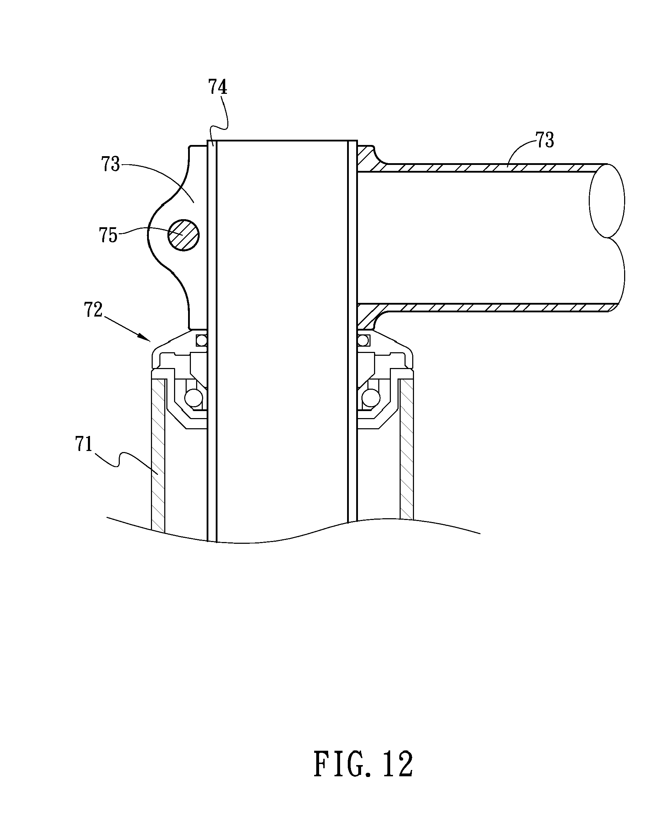

Referring to Figs. 10 and 11, in step (d), the pressing member 31 is first removed from the steering tube 74 and driving member 22 is rotated to drive the wedge-shaped member 23 to move linearly and downward, a gap is defined between the second bottom tapered surface 231 and the first bottom tapered surface 212, so that the expandable portion can be moved downward and the expandable member 21 is loosened relative to the steering tube 74. The whole expandable unit 20 can be removed from the steering tube 74 and the stem tube 73, the upper bearing 72, the head tube 71 and the steering tube 74 are securely assembled together as shown in Fig. 12.

The present invention provides the method which does not leave the securing device 10 in the steering tube 74 so that when the steering system is assembled, no part is left in the steering tube 74.

The securing device 10 can be repeatedly used and is easily manufactured. The assembling steps are simplified and can be completed within short period of time. The steering system of the bicycle is light in weight because the no part is left in the steering tube 74.

The stem tube 73 is secured by the bolt 75 and the secured stem tube 73 ensures that the upper bearing 72, the head tube 71 and the steering tube 74 are well positioned. When maintaining the steering system, simply loosening the bolt 75 and because the securing device 10 is not left in the steering tube 74, the maintaining processes will be easy and simplified.

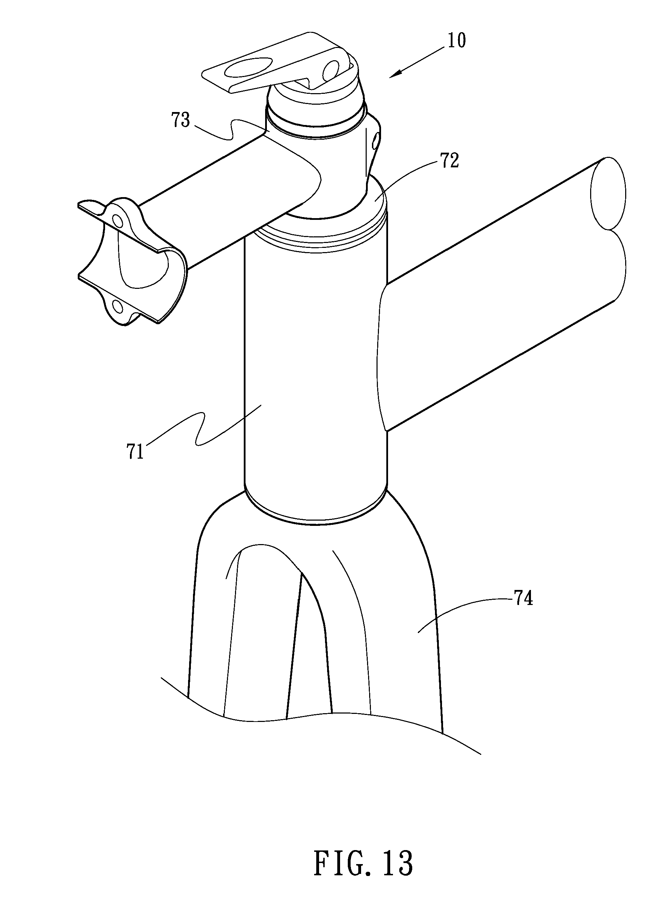

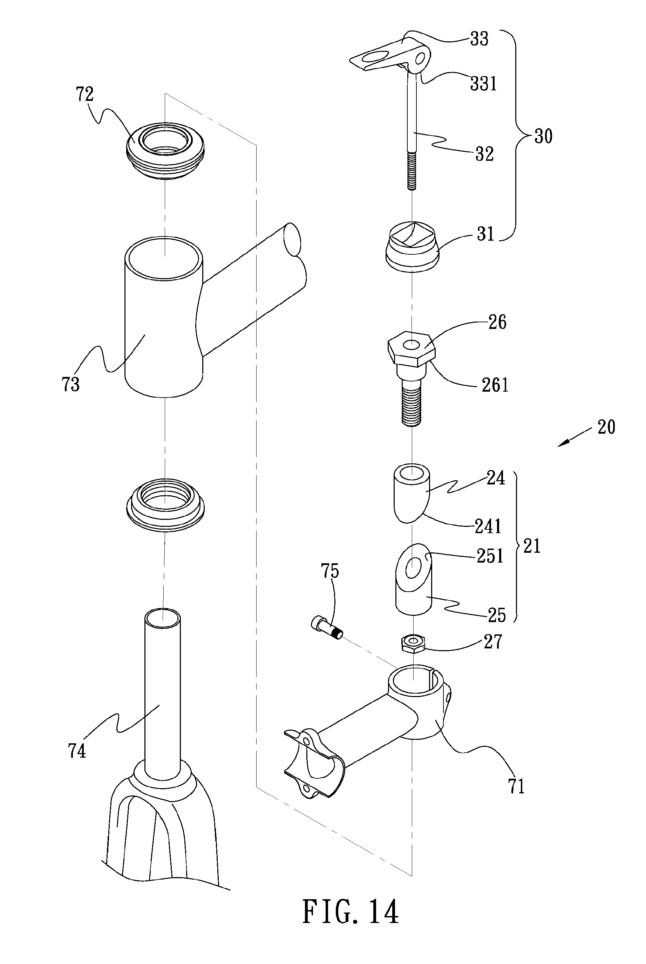

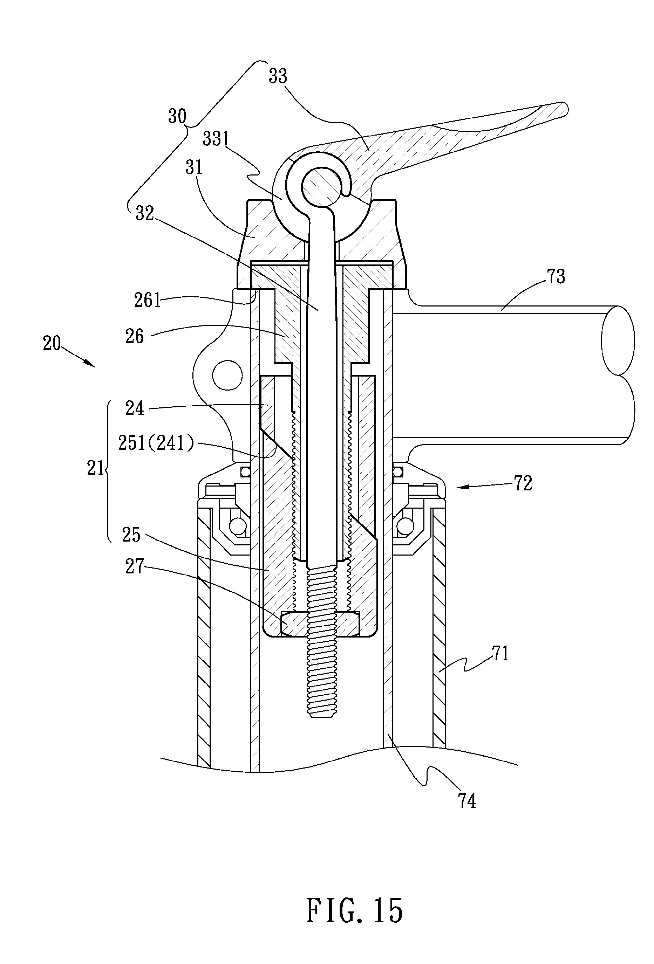

Figs. 13 to 20 disclose a second embodiment of the present invention, wherein the expandable member 21 includes an upper wedge 24 and a lower wedge 25. The upper wedge 24 includes a third upper tapered surface 241 and the lower wedge 25 includes a third bottom tapered surface 251 which slidably contacts the third upper tapered surface 241. A driving member 26 is inserted into the expandable member 21 and includes a pressing surface 261 which contacts the top of the steering tube 74. A nut 27 is located beneath the lower wedge 25.

The pressing unit 30 includes a pressing member 31 which contacts the top of the stem tube 73. The pressing member 31 includes a driving rod 32 which has a first end extending through the driving member 22 and is threadedly connected with the nut 27 and a second end of the driving rod 32 is pivotably connected with a lever 33. The lever 33 includes a cap portion 331 which presses the pressing member 31 to move the driving rod 32 linearly.

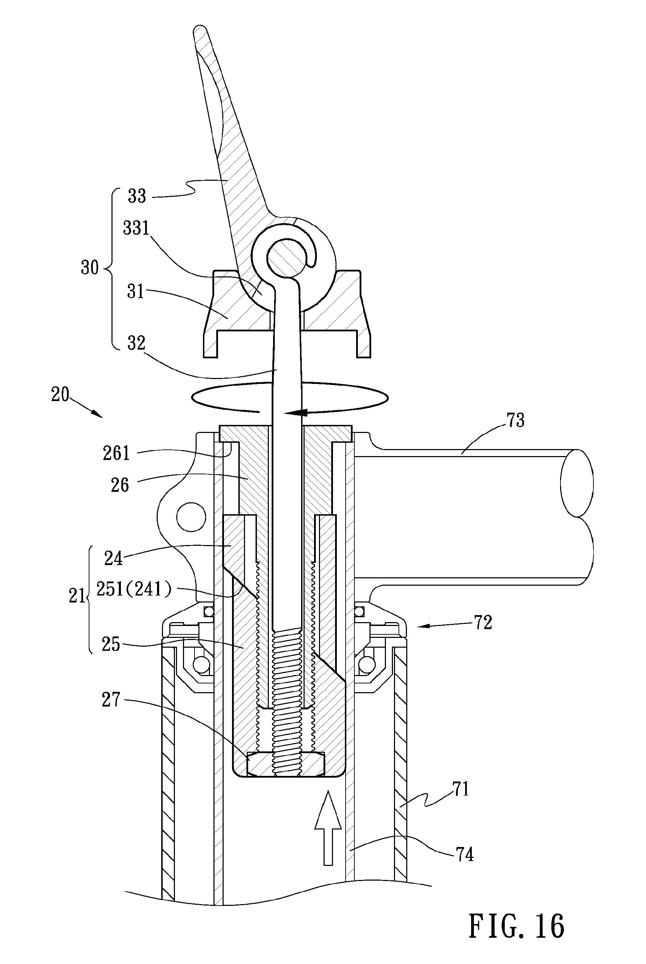

As shown in Fig. 16, after the step (a) is completed, in the step (b), the expandable unit 20 is inserted into the steering tube 74 and the pressing surface 261 contacts the top of the steering tube 74.

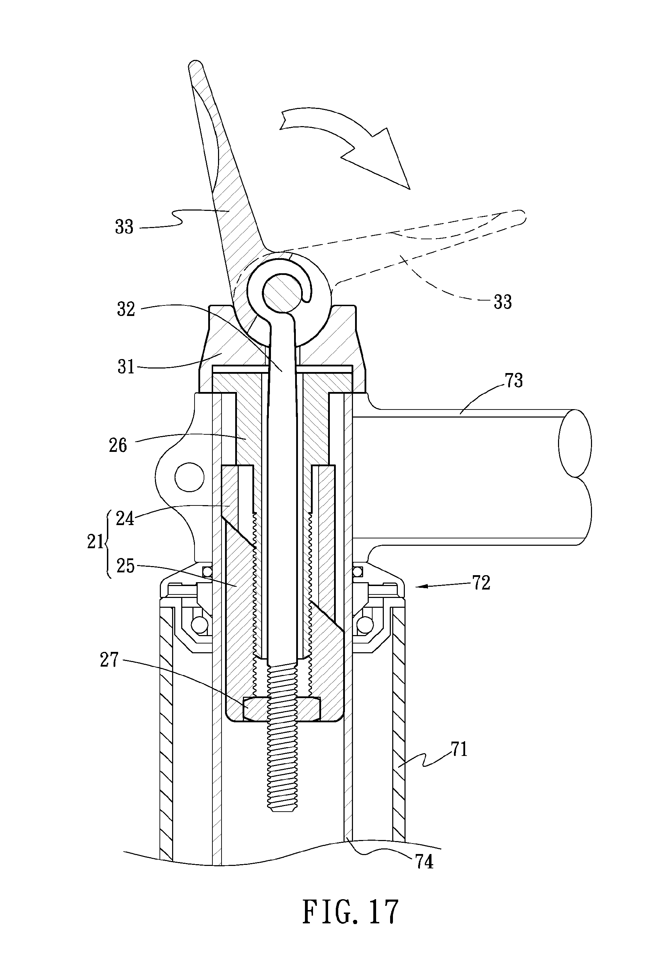

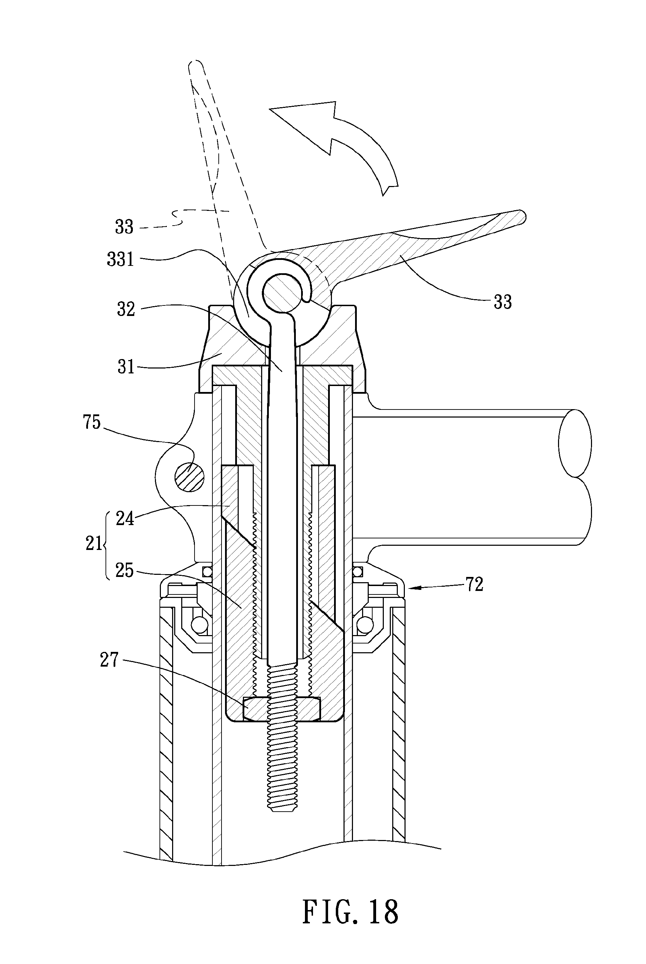

In step (c), the driving member 26 is rotated and the lower wedge 25 slides along the third bottom tapered surface 251 and pushes the upper wedge 24 until the upper and lower wedges 24, 25 contact the inner periphery of the steering tube 74. As shown in Figs. 17 and 18, the pressing member 31 and the driving rod 32 are pressed downward until the bottom of the pressing member 31 presses on the top of the stem tube 31. The lever 33 is pivoted upward and the cam portion 331 is rotated to push the stem tube 73 downward to secure the upper bearing 72.

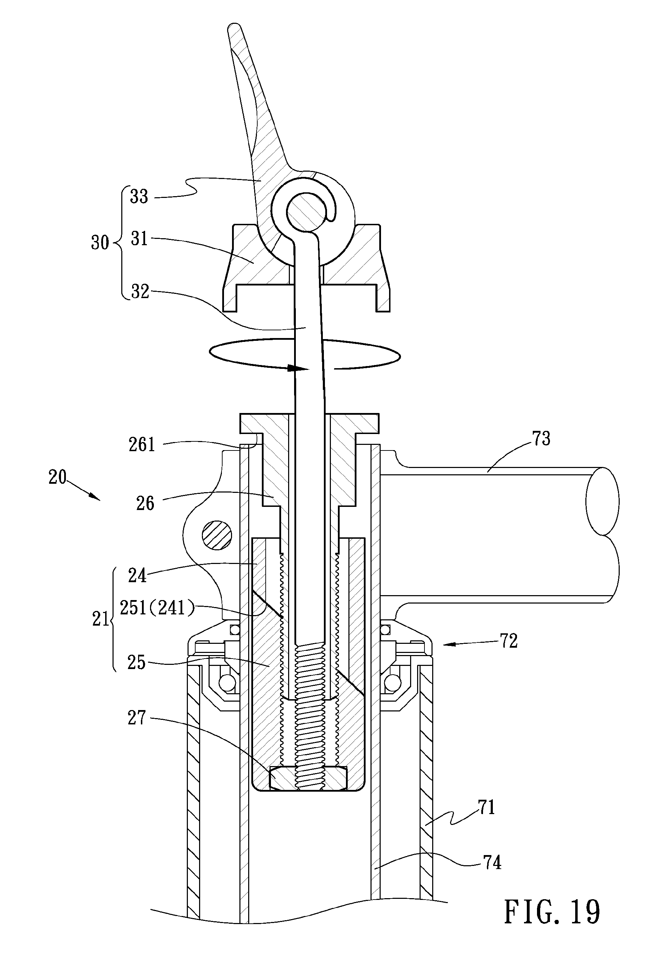

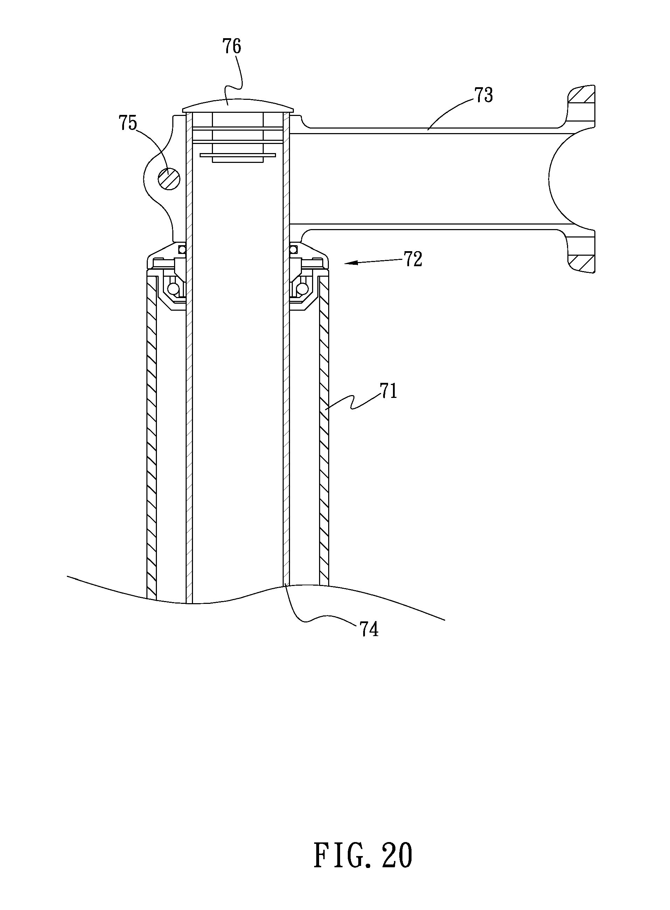

As shown in Fig. 19, in step (d), the lever 33 and the pressing member 31 are moved upward and then rotate the driving member 26 in opposite direction, the lower wedge 25 is moved downward and disengaged form the upper wedge 24. Two respective gaps are defined between the upper and lower wedges 24, 25 and the inner periphery of the steering tube 74. The securing device 10 is then able to be removed from the steering tube 74, and the stem tube 73, the upper bearing 72, the head tube 71 and the steering tube 74 are securely assembled as shown in Fig. 20.

A cap 76 is used to seal the opening in the top of the steering 74 to prevent dust or rain from entering the steering tube 74.

While we have shown and described the embodiment in accordance with the present invention, it should be clear to those skilled in the art that further embodiments may be made without departing from the scope of the present invention.

## Claims

1. A method for securing handlebar stem to steering tube, comprising:
step (a): placing a head tube, an upper bearing set and a stem tube on a top of a steering tube, an underside of the stem tube being in contact with the upper bearing set;
step (b): using a securing device having an expandable portion inserted into the steering tube and applying a downward force to a top of the stem tube;
step (c): rotating the securing device to urge the expandable portion against an inner periphery of the steering tube and the downward force pressing the stem tube onto the upper bearing set, and
step (d): releasing the expandable portion and removing the securing device from the steering tube.

2. The method as claimed in claim 1, wherein the securing device includes an expandable unit and a pressing unit, the expandable unit has an expandable member and the pressing unit activates the expandable member to expand and contact the inner periphery of the steering tube, the pressing unit applies a force to press the top of the stem tube which is moved and presses onto the upper bearing set.

3. The method as claimed in claim 2, wherein the expandable member is a tubular member and includes a first upper tapered surface and a first bottom tapered surface on two ends thereof, a driving member extends through the expandable member and includes a second upper tapered surface which is engaged with the first upper tapered surface of the expandable member, a wedge-shaped member is located beneath the driving member and linearly moves when the driving member rotates, the wedge-shaped member includes a second bottom tapered surface which is engaged with the first bottom tapered surface.

4. The method as claimed in claim 3, wherein the driving member includes a pressing surface which contacts the top of the steering tube.

5. The method as claimed in claim 3, wherein the pressing unit includes a pressing member which contacts the top of the stem tube, the pressing member includes a driving rod which is inserted into the driving member.

6. The method as claimed in claim 2, wherein the expandable member includes an upper wedge and a lower wedge, the upper wedge includes a third upper tapered surface and the lower wedge includes a third bottom tapered surface which slidably contacts the third upper tapered surface, a driving member is inserted into the expandable member and includes a pressing surface which contacts the top of the steering tube, a nut is located beneath the lower wedge.

7. The method as claimed in claim 2, wherein the pressing unit includes a pressing member which contacts the top of the stem tube, the pressing member includes a driving rod which has a first end extending through the driving member and is threadedly connected with the nut and a second end of the driving rod is pivotably connected with a lever.

8. The method as claimed in claim 7, wherein the lever includes a cap portion which presses the pressing member to move the driving rod linearly.
